Europäisches Patentamt

European Patent Office

Office européen des brevets

(19)

(11) **EP 0 966 335 B1**

(12) **EUROPÄISCHE PATENTSCHRIFT**

(45) Veröffentlichungstag und Bekanntmachung des Hinweises auf die Patenterteilung:
**05.12.2001 Patentblatt 2001/49**

(51) Int Cl.$^7$: **B23B 29/034**

(86) Internationale Anmeldenummer:
**PCT/EP98/00049**

(21) Anmeldenummer: **98906863.0**

(22) Anmeldetag: **07.01.1998**

(87) Internationale Veröffentlichungsnummer:
**WO 98/32561 (30.07.1998 Gazette 1998/30)**

(54) **WERKZEUGKOPF FÜR DEN EINSATZ IN WERKZEUGMASCHINEN**

TOOL HEAD FOR USE IN MACHINE TOOLS

TETE D'OUTIL S'UTILISANT DANS DES MACHINES-OUTILS

(84) Benannte Vertragsstaaten:
**AT BE CH DE DK ES FR GB IT LI NL SE**

(30) Priorität: **23.01.1997 DE 19702219**

(43) Veröffentlichungstag der Anmeldung:
**29.12.1999 Patentblatt 1999/52**

(73) Patentinhaber: **KOMET Präzisionswerkzeuge Robert Breuning GmbH D-74354 Besigheim (DE)**

(72) Erfinder:
• **FEIL, Erich D-74382 Neckarwestheim (DE)**

• **HATZFELD, Falk D-74379 Ingersheim (DE)**
• **HÖRL, Roland D-74357 Bönnigheim (DE)**

(74) Vertreter: **Wolf, Eckhard, Dr.-Ing. et al Patentanwälte Wolf & Lutz Hauptmannsreute 93 70193 Stuttgart (DE)**

(56) Entgegenhaltungen:
**US-A- 4 569 115        US-A- 4 602 539**

• **PATENT ABSTRACTS OF JAPAN vol. 010, no. 307 (M-527), 18.Oktober 1986 & JP 61 121804 A (KOMATSU LTD), 9.Juni 1986,**

**Beschreibung**

Die Erfindung betrifft einen Werkzeugkopf für den Einsatz in Werkzeugmaschinen mit einem Grundkörper, mit einem am Grundkörper angeordneten, mit einer Maschinenspindel kuppelbaren Werkzeugschaft, mit einer Werkzeugaufnahme für ein Schneidwerkzeug und mit einem die Werkzeugaufnahme außermittig tragenden, relativ zum Grundkörper unter Verstellen des Schneidradius des Schneidwerkzeugs vorzugsweise um eine zur Grundkörperachse parallele Exzenterachse drehbaren Drehschieber.

In der nicht vorveröffentlichten DE-A-197 17 172 wurde in Anwendung auf einen Plandrehkopf bereits vorgeschlagen, als Arbeitsschieber einen exzentrisch auf dem Werkzeugkopf angeordneten Drehschieber vorzusehen, der über ein Antriebsritzel und ein mit dem Drehschieber starr verbundenes Zahnrad unter im wesentlichen radialer Verstellung der Werkzeugaufnahme drehbar ist. Durch die Drehung des Drehschiebers ergibt sich keine Massenverlagerung, so daß auf die Anordnung eines Ausgleichsschiebers verzichtet werden kann. Ein Nachteil des Drehschiebers wird jedoch darin gesehen, daß beim Verstellvorgang nicht nur der Abstand der Schneiden zur Grundkörperachse geändert wird, sondern auch die Ausrichtung der Schneide gegenüber der Drehachse.

Dieser Stand der Technik stellt auch einen sog. internen stand der Technik dar.

Ausgehend hiervon liegt der Erfindung die Aufgabe zugrunde, den bekannten Werkzeugkopf der eingangs angegebenen Art dahingehend zu verbessern, daß beim Verstellvorgang die Schneidengeometrie nachgeführt werden kann.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt vor allem der Gedanke zugrunde, daß die Werkzeugaufnahme in Abhängigkeit vom Drehwinkel des Drehschiebers oder vom Schneidradius gegenüber dem Drehschieber definiert drehverstellbar ist. Damit ist es möglich, die Schneidengeometrie beim Verstellen des Schneidradius konstant zu halten. Dies kann beispielsweise dadurch erfolgen, daß die Werkzeugaufnahme unter definierter Ausrichtung des Schneidwerkzeugs relativ zur Grundkörperachse gegenüber dem Drehschieber verstellbar ist. Dies erfolgt zweckmäßig dadurch, daß die Werkzeugaufnahme unter Ausfluchtung einer mit dem Schneidwerkzeug verbundenen Bezugsebene mit der Grundkörperachse gegenüber dem Drehschieber verstellbar ist. Die Werkzeugaufnahme kann zu diesem Zweck in einer Exzenterbohrung des Drehschiebers um eine zu dessen Exzenterachse parallele Achse verdrehbar angeordnet werden.

Gemäß einer bevorzugten Ausgestaltung der Erfindung ist eine radial über die Grundkörperachse überstehende und um diese Achse drehbare Ausrichtleiste vorgesehen, gegenüber der eine an der Werkzeugaufnahme oder am Schneidwerkzeug angeordnete Bezugsfläche beim Verstellen des Drehschiebers ausrichtbar ist.

Eine hierzu alternative Ausgestaltung der Erfindung sieht vor, daß der Drehschieber und die Werkzeugaufnahme über Getriebemittel miteinander und mit dem Grundkörper gekoppelt sind, wobei die Getriebemittel zweckmäßig als Zahnradgetriebe ausgebildet sind.

Gemäß einer bevorzugten Weiterbildung dieses Prinzips ist der Drehschieber in einer Exzenterbohrung des Grundkörpers drehbar gelagert, während die Werkzeugaufnahme in einer Exzenterbohrung des Drehschiebers drehbar gelagert ist. Zwischen einem grundkörperfesten oder maschinenseitigen Antriebsmechanismus und dem exzentrischen Drehschieber sind dabei drehschieberseitige Getriebemittel angeordnet, während zwischen der Werkzeugaufnahme und dem Grundkörper werkzeugaufnahmeseitige Getriebemittel angeordnet sind. Die Nachführung der Schneide erfolgt hierbei dadurch, daß die drehschieberseitigen Getriebemittel und die werkzeugaufnahmeseitigen Getriebemittel ein definiertes Übersetzungsverhältnis aufweisen. Zweckmäßig weisen hierzu die drehschieberseitigen Getriebemittel einen durch den Antriebsmechanismus antreibbaren, zur Grundkörperachse konzentrischen, vorzugsweise als Innenzahnkranz ausgebildeten Zahnkranz und einen mit diesem kämmenden, vorzugsweise als Außenzahnkranz ausgebildeten drehschieberfesten Zahnkranz auf, während die werkzeugaufnahmeseitigen Getriebemittel ein zur Exzenterachse des Drehschiebers konzentrisches grundkörperfestes Zahnrad und einen mit diesem kämmenden, vorzugsweise als Innenzahnkranz ausgebildeten, werkzeugaufnahmefesten Zahnkranz aufweisen können.

Um die beim Schneid- und Verstellvorgang auftretenden Kräfte möglichst spielfrei übertragen zu können, ist der Drehschieber in einem in der Exzenterbohrung befindlichen, vorzugsweise als Kegelrollenlager ausgebildeten Axial/Radiallager gelagert. Aus Platzgründen ist zumindest ein Teil der Zahnkränze und der zugehörigen Bauteile segmentartig ausgebildet, wobei zu berücksichtigen ist, daß in diesen Bereichen keine Vollumdrehungen, sondern nur Teilumdrehungen der Bauteile erfolgen.

Durch die exzentrische Anordnung des Schneidwerkzeugs am Drehschieber entsteht eine Unwucht, die durch Ausgleichsmassen sowohl im Drehschieber als auch im Grundkörper ausgeglichen werden können. Ein wesentlicher Vorteil der Drehschieber besteht jedoch darin, daß die Unwuchten technisch symmetrisch ausgestaltet werden können. Dies bedeutet, daß sie jeweils bezüglich ihrer Drehachse massensymmetrisch sind. Daher ist eine exakte Auswuchtung des Werkzeugkopfes bezüglich der Drehachse möglich, ohne daß es eines Ausgleichsschiebers bedarf.

Gemäß einer weiteren Ausführungsvariante der Erfindung ist in einer konzentrischen Bohrung des Grundkörpers ein Rundschieber, in einer exzentrischen Bohrung des Rundschiebers der Drehschieber und in einer exzentrischen Bohrung des Drehschiebers die Werkzeugaufnahme jeweils drehbar gelagert, wobei der Rundschieber unter Mitnahme des Drehschiebers und der Werkzeugaufnahme über einen grundkörperfesten oder maschinenseitigen Antriebsmechanismus um die Grundkörperachse drehbar ist und wobei zwischen dem Drehschieber und dem Grundkörper einerseits und der Werkzeugaufnahme andererseits Getriebemittel angeordnet sind, die durch ein definiertes Übersetzungsverhältnis aufeinander abgestimmt sind. Als Getriebemittel trägt der exzentrische Drehschieber ein zu seiner Drehachse konzentrisches Zahnrad, mit dem er auf einem grundkörperfesten, vorzugsweise als Innenzahnkranz ausgebildeten Zahnkranz abwälzbar ist. Andererseits trägt die Werkzeugaufnahme zweckmäßig ein zu ihrer Drehachse konzentrisches Zahnrad, mit dem sie gegebenenfalls unter Zwischenschaltung eines am Drehschieber lose gelagerten Zwischenzahnrad auf einem grundkörperfesten, vorzugsweise als Innenzahnkranz ausgebildeten Zahnkranz abwälzbar ist. Die Exzentrizitäten der im Rundschieber und im Drehschieber befindlichen Exzenterbohrungen sind vorteilhafterweise gleich groß.

Der Antriebsmechanismus weist vorteilhafterweise einen zur Grundkörperachse konzentrischen, maschinenseitig antreibbaren Drehstab oder ein Zwischengetriebe mit zur Grundkörperachse konzentrischer Abtriebswelle auf. Das Zwischengetriebe kann dabei als rotatorisches Untersetzungsgetriebe oder als translatorisch/rotatorisches Umsetzungsgetriebe ausgebildet sein. Als rotatorisches Untersetzungsgetriebe wird vorteilhafterweise ein Planetengetriebe oder ein Harmonic-Drive-Getriebe mit zueinander koaxialen An- und Abtriebswellen verwendet.

Grundsätzlich ist es möglich, für den Drehschieber, den Rundschieber und die Werkzeugaufnahme voneinander getrennte, elektronisch miteinander koppelbare Antriebsmittel vorzusehen. Damit ist es möglich, die Nachstellvorschrift für die Werkzeugaufnahme in Abhängigkeit von der Drehschieberverstellung weitgehend beliebig zu gestalten. Damit kann bewußt auf die Spanbildung Einfluß genommen werden, beispielsweise bei der Bearbeitung von Werkstücken mit unterschiedlichen Materialien. Weiter kann mit diesen Vorkehrungen die Schneidenstandzeit günstig beeinflußt werden.

Zur Verstellwegüberwachung kann im Grundkörper ein den Verstellwinkel des Drehschiebers oder des Rundschiebers oder den Verstellweg des Schneidwerkzeugs messendes, vorzugsweise elektronisches Winkel- oder Wegmeßsystem vorgesehen werden.

Gemäß einer weiteren vorteilhaften Ausgestaltung der Erfindung sind mindestens zwei in Exzenterbohrungen des Grundkörpers oder des Rundschiebers angeordnete, gemeinsam oder getrennt ansteuerbare Drehschieber mit verstellbaren Werkzeugaufnahmen vorgesehen.

Im folgenden wird die Erfindung anhand einiger in der Zeichnung in schematischer Weise dargestellter Ausführungsbeispiele näher erläutert. Es zeigen

| | |
|---|---|
| Fig. 1a | einen Schnitt durch einen als Plandrehkopf ausgebildeten Werkzeugkopf mit exzentrischem Drehschieber; |
| Fig. 1b | eine Draufsicht auf den Werkzeugkopf mit Werkzeugaufnahme; |
| Fig. 1c | einen Schnitt durch den Werkzeugkopf im Bereich des Zahnradgetriebes; |
| Fig. 1d | einen Schnitt durch den Drehschieber; |
| Fig. 2a und b | eine Draufsicht auf den Werkzeugkopf in schematischer Darstellung in zwei Drehstellungen des Drehschiebers; |
| Fig. 3a | eine Draufsicht auf ein gegenüber Fig. 1 abgewandeltes Ausführungsbeispiel eines Plandrehkopfs; |
| Fig. 3b | einen Schnitt entlang der Schnittlinie B-B der Fig. 3a; |
| Fig. 3c | einen Schnitt durch den Werkzeugkopf in gegenüber Fig. 3b um 90° verdrehter Lage; |
| Fig. 3d | einen Schnitt entlang der Schnittlinie D-D der Fig. 3a; |
| Fig. 4a | einen Schnitt durch einen gegenüber Fig. 1 und 3 abgewandelten Werkzeugkopf mit konzentrischem Rundschieber und exzentrischem Drehschieber; |
| Fig. 4b und c | eine Draufsicht auf den Werkzeugkopf nach Fig. 4a in zwei verschiedenen Winkelstellungen des Rundschiebers in schematischer Darstellung; |
| Fig. 5 | eine Draufsicht auf einen abgewandelten Werkzeugkopf mit Ausrichtleiste in schematischer Darstellung; |

| Fig. 6a | eine Grafik zur Berechnung des Schneidradius und des Korrekturwinkels der Schneidplatte eines Werkzeugkopfs mit Drehschieber in vereinfachter Darstellung; |
| Fig. 6b und c | zwei Diagramme s = s($\alpha$) und $\delta = \delta(\alpha$); |
| Fig. 7 | ein Modell zur Berechnung des Schneidradius (x) und des Korrekturwinkels ($\delta$) der Schneidplatte für einen Werkzeugkopf mit gegenüber Fig. 6a verallgemeinerter Anordnung des Drehschiebers im Grundkörper. |

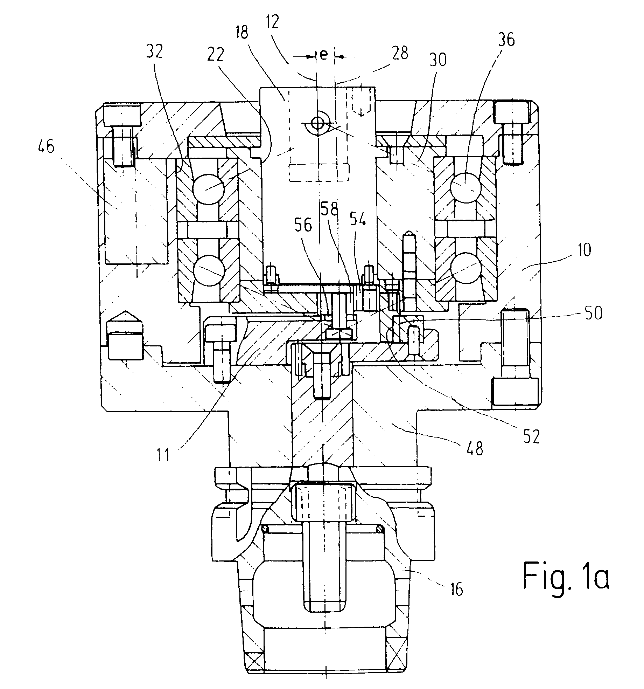

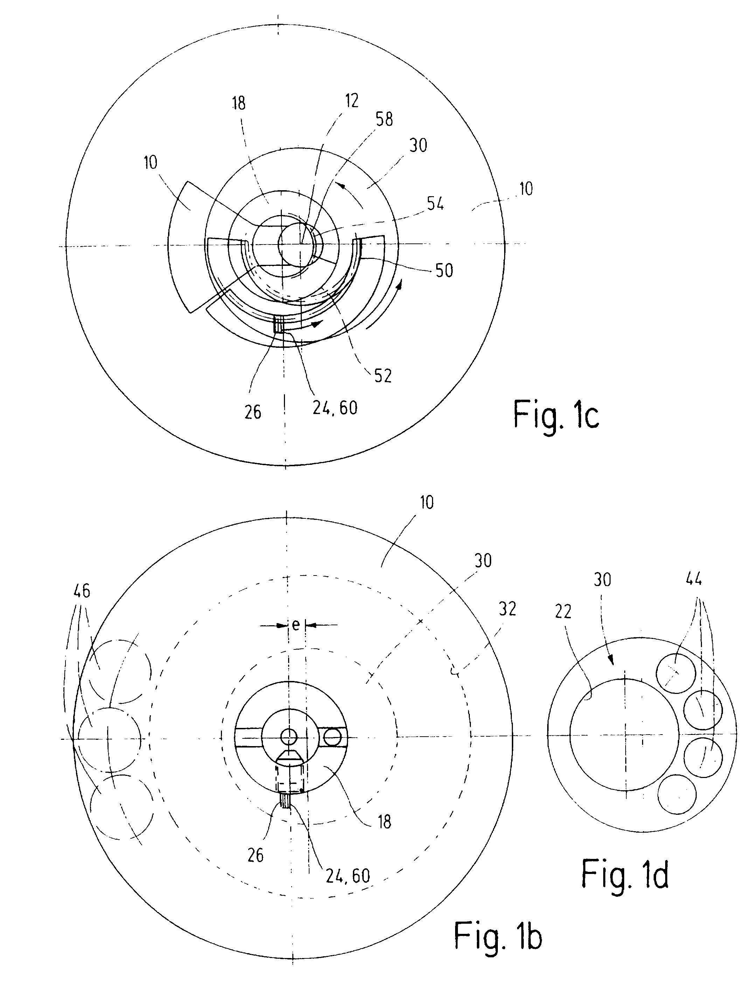

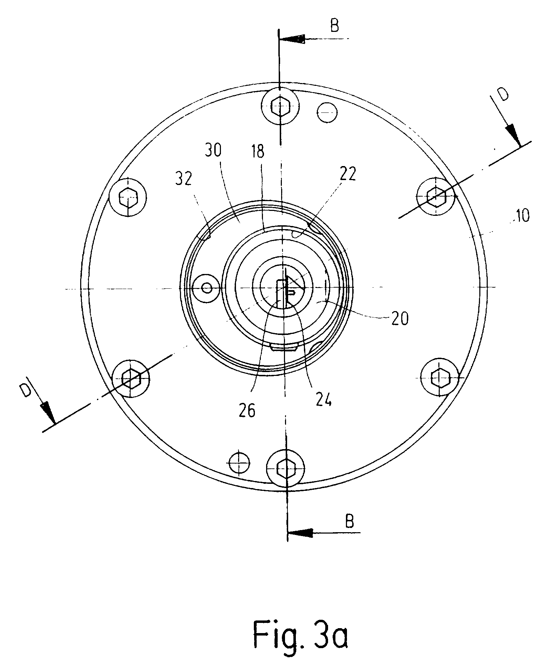

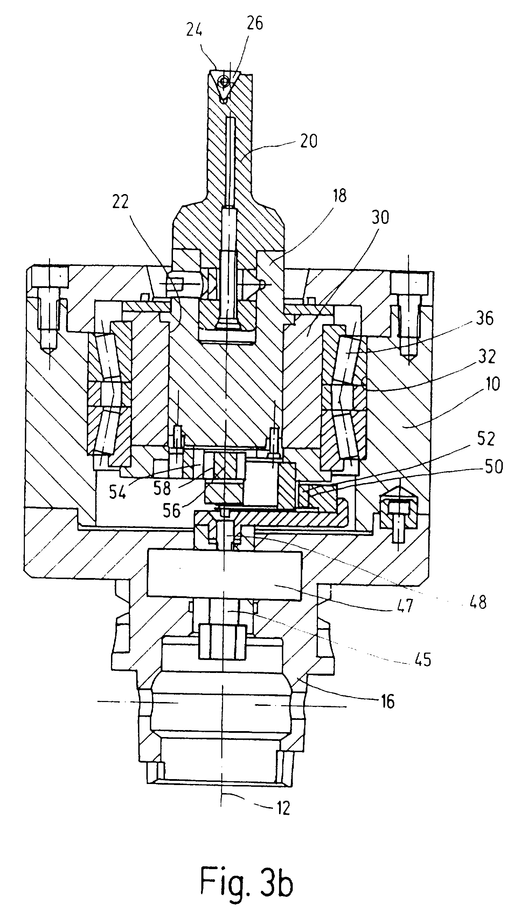

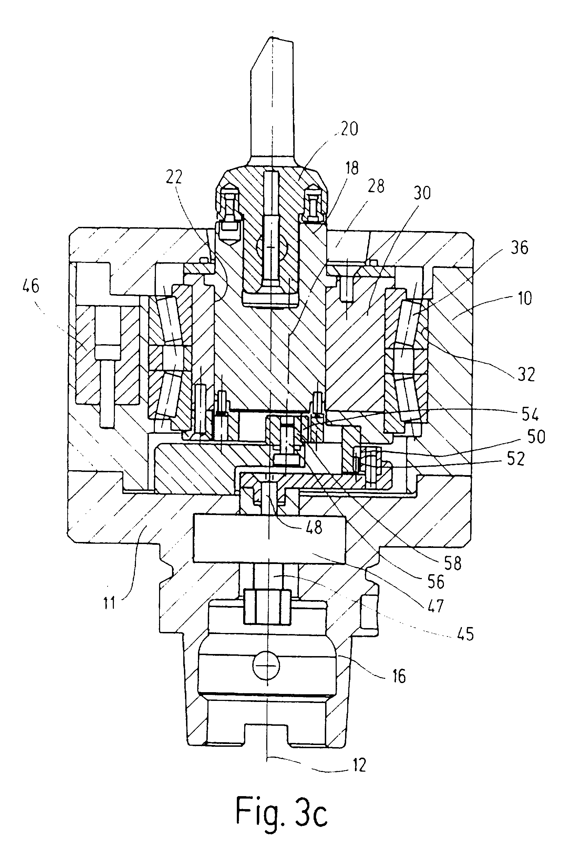

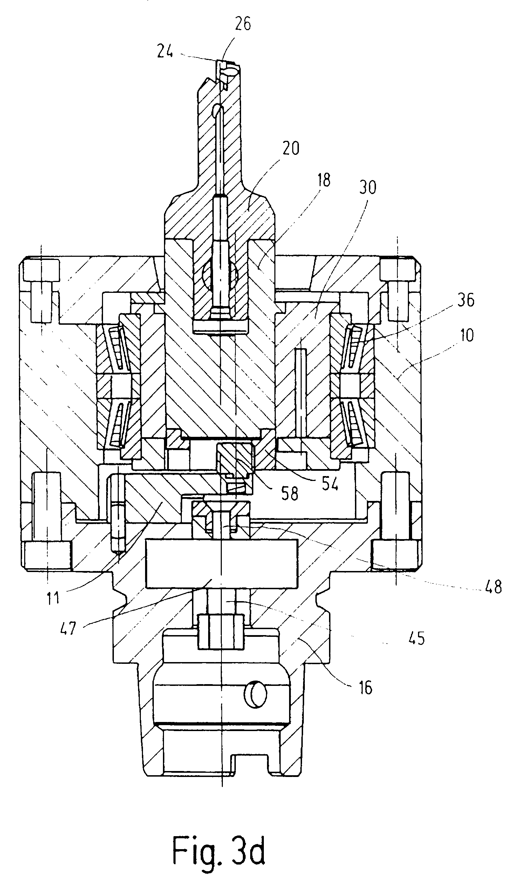

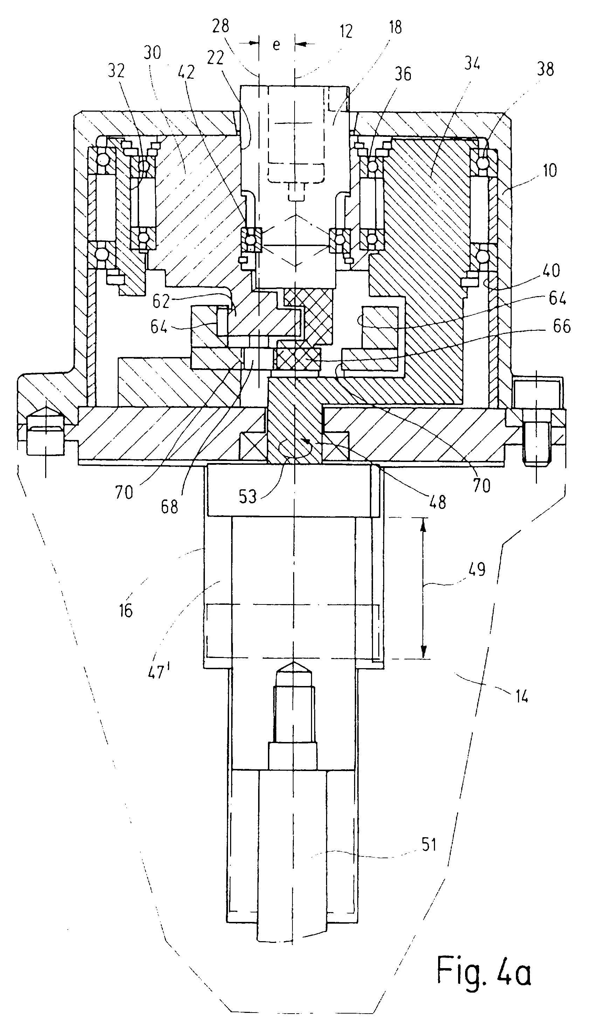

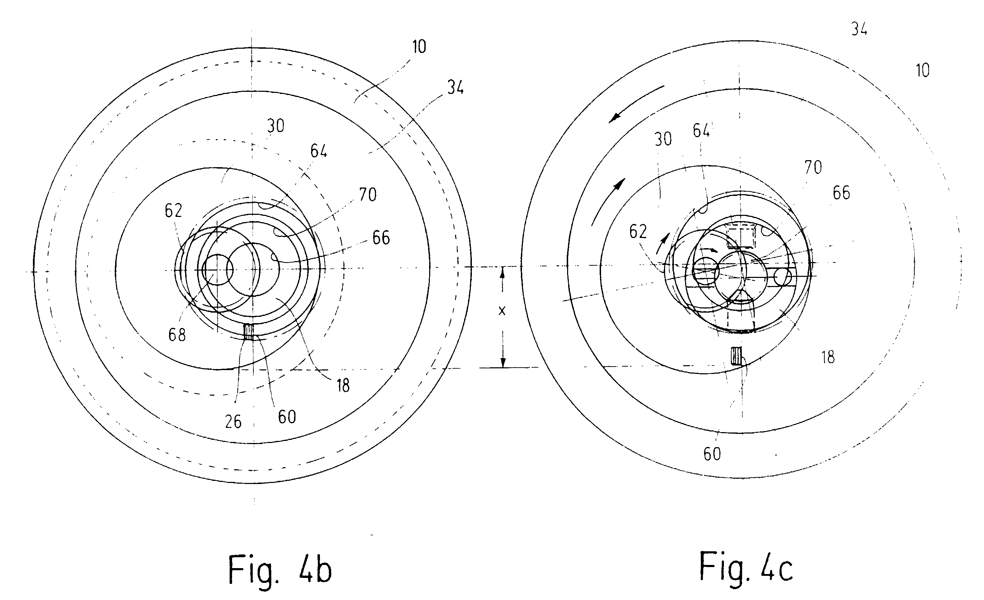

Die in der Zeichnung dargestellten Werkzeugköpfe sind als Plandrehköpfe für den Einsatz in Werkzeugmaschinen bestimmt. Der Werkzeugkopf besteht im wesentlichen aus einem um eine Drehachse 12 drehbaren Grundkörper 10, einem axial über den Grundkörper überstehenden, mit einer Maschinenspindel 14 (Fig. 4a) kuppelbaren Werkzeugschaft 16, einer Werkzeugaufnahme 18 für ein Schneidwerkzeug 20, einer am Schneidwerkzeug 20 angeordneten, eine Schneide 24 aufweisenden Schneidplatte 26 und einen die Werkzeugaufnahme 18 in einer Exzenterbohrung 22 tragenden, relativ zum Grundkörper unter Verstellen des Schneidradius der Schneide 24 um eine zur Grundkörperachse 12 parallele Exzenterachse 28 drehbaren Drehschieber 30. Der Drehschieber 30 ist zu diesem Zweck in einer Exzenterbohrung 32 des Grundkörpers 10 (Fig. 1 und 3) oder eines Rundschiebers 34 (Fig. 4) mittels Wälzlagern 36 gelagert. Im Falle der Fig. 4 ist der Rundschieber 34 seinerseits mittels Wälzlagern 38 in einer zur Drehachse 12 konzentrischen Bohrung 40 gelagert. Die Werkzeugaufnahme 18 ist im Falle der Fig. 1 und 3 mit ihrer zylindrischen Oberfläche in einem die Exzenterbohrung 22 bildenden Gleitlager gelagert, während sie im Falle der Fig. 4 zusätzlich durch ein Wälzlager 42 in der Exzenterbohrung 22 abgestützt ist.

Wie vor allem aus den Fig. 1a, 3c und d sowie Fig. 4b zu ersehen ist, weisen die Exzenterbohrungen 22 und 32 bei den gezeigten Ausführungsbeispielen jeweils die gleiche Exzentrizität e auf. Durch die exzentrische Anordnung des Schneidwerkzeugs 20 im Drehschieber 30 einerseits und durch die exzentrische Anordnung des Drehschiebers 30 im Grundkörper 10 bzw. im Rundschieber 34 andererseits entsteht eine Unwucht, die durch Ausgleichsmassen 44 im Drehschieber und Ausgleichsmassen 46 im Grundkörper 10 oder im Rundschieber ausgeglichen werden kann.

Ein wesentlicher Vorteil des Drehschiebers besteht darin, daß die Unwuchten bezüglich der Drehachse 12 des Grundkörpers massensymmetrisch ausgeglichen werden können. Durch die Drehung des Drehschiebers ergibt sich keine Massenverlagerung, so daß kein Ausgleichsschieber erforderlich ist. Dadurch kommt man mit einer relativ niedrigen und vom Verstellweg unabhängigen Antriebsleistung aus.

Bei den in Fig. 1 bis 3 gezeigten Ausführungsbeispielen wird der Drehschieber 30 über eine zur Drehachse 12 konzentrische Drehstange oder Abtriebswelle 48 eines maschinenseitigen Antriebsmechanismus angetrieben. Der Antriebsmechanismus umfaßt ein Umsetzungsgetriebe 45 ins Langsame, dessen maschinenseitige Antriebswelle 47 und dessen kopfseitige Abtriebswelle 48 koaxial zueinander angeordnet sind. Das Untersetzungsverhältnis des Umsetzungsgetriebes wird zweckmäßig zwischen 10:1 und 1000:1, vorzugsweise etwa 100:1 gewählt.

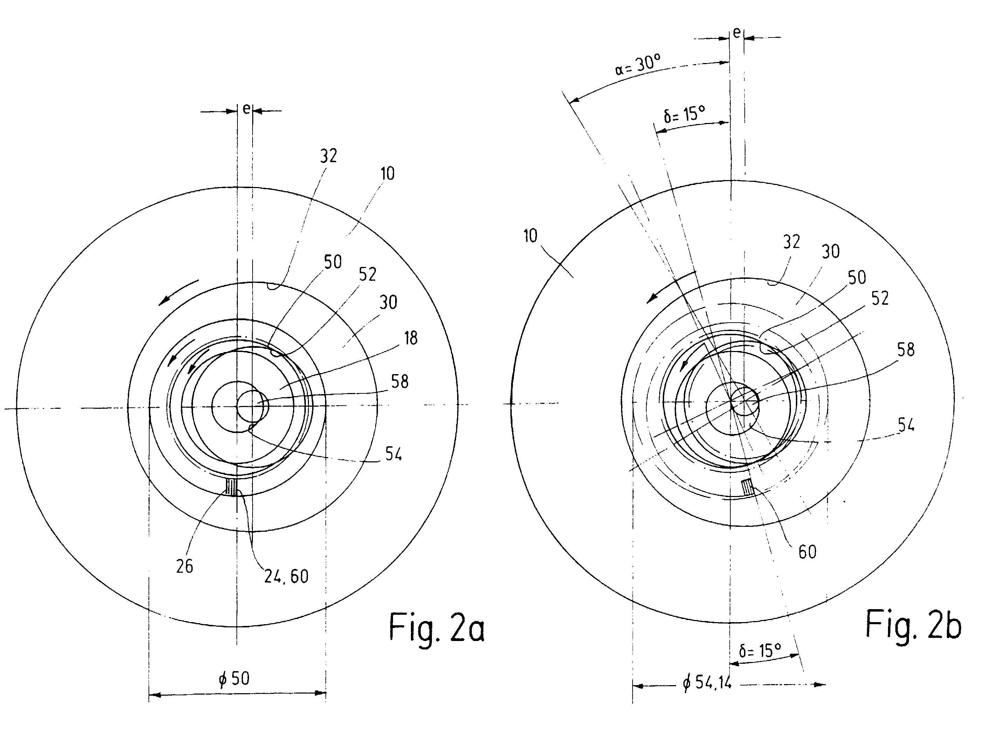

Die Abtriebswelle 48 trägt an ihrem stirnseitigen Ende einen segmentartig ausgebildeten Innenzahnkranz 50, der mit einem Außenzahnkranz 52 kleineren Durchmessers des Drehschiebers 30 kämmt und gegenüber diesem spielfrei gestellt ist. Beim Verdrehen des Drehschiebers 30 wird die Werkzeugaufnahme 18 unter Verstellung des Schneidradius der Schneide 24 mitgenommen. Um die bei der Drehmitnahme des Schneidwerkzeugs sich verändernde Schneidengeometrie (Ausrichtung der Schneide bezüglich der Drehachse 12) zu kompensieren, trägt die Werkzeugaufnahme 18 einen zur Achse der Werkzeugaufnahme 18 konzentrischen Innenzahnkranz 54, der mit einem grundkörperfesten gegebenenfalls an einen grundkörperfesten Halter 11 angeformten Zahnrad 58 kämmt. Die Übersetzungsverhältnisse im Bereich der durch den Innenzahnkranz 50 und den Außenzahnkranz 52 gebildeten Getriebemittel einerseits und der durch den Innenzahnkranz 54 und das Zahnrad 58 gebildeten Getriebemittel andererseits sind so aufeinander abgestimmt, daß die Schneidplatte 26 mit ihrer Bezugsebene 60 in jeder Drehlage des Drehschiebers 30 zur Drehachse 12 hin ausgefluchtet wird. Bei dem in Fig. 2a und b gezeigten Ausführungsbeispiel wird die Schneidplatte 26 bei einem Drehwinkel $\alpha = 30°$ des Drehschiebers 30 um den Korrekturwinkel $\delta = 15°$ nachgeführt. Gleichzeitig wird der Schneiddurchmesser von anfänglich 50 mm auf 54,14 mm vergrößert.

Bei dem Ausführungsbeispiel nach Fig. 4a bis c wird der Runschieber 34 über die Drehstange oder Abtriebswelle 48 konzentrisch zum Grundkörper 10 gedreht. Die Abtriebswelle 48 wird ihrerseits über einen Antriebsmechanismus angetrieben, der eine maschinenseitige Zugstange 51 und ein translatorisch/rotatorisches Umsetzungsgetriebe 47 umfaßt. Die von der Zugstange 51 in Richtung des Doppelpfeils 49 ausgeführte Verschiebebewegung wird in dem Umsetzungsgetriebe 47 in die erwünschte Drehbewegung der Abtriebswelle 48 in Richtung des Pfeils 53 umgesetzt. Der Antriebsmechanismus und die Getriebemittel können im Grundkörper konstruktiv so ineinandergeschachtelt werden, daß sich eine relativ kurze Baulänge ergibt. Durch die Abtriebswelle 48 wird der in der Exzenterbohrung 32 des Rundschiebers befindliche Drehschieber 30 sowie die in der Exzenterbohrung 22 befindliche Werkzeugaufnahme 18 in Drehrichtung mitgenommen. Zur Verstellung des Drehschiebers 30 gegenüber dem Rundschieber 34 und dem Grundkörper 10 trägt der Drehschieber 30 einen Außenzahnkranz 62, der mit einem grundkörperfesten Innenzahnkranz 64 kämmt. Weiter trägt die Werkzeugaufnahme 18 einen zu seiner Achse konzentrischen Außenzahnkranz 66, der über ein lose auf der Drehschieberachse 28 gelagertes Zwischenzahnrad 68 mit einem grundkörperfesten Innenzahnkranz 70 kämmt. Die Übersetzungsverhältnisse der durch die genannten Zahnkränze gebildeten Getriebemittel sind so aufeinander abgestimmt, daß beim Verstellen des Schneidradius der Schneidplatte 26 die mit der Schneidplatte 26 verbundene Bezugsebene 60 zur Drehachse 12 hin ausgerichtet wird (vgl. den Übergang zwischen Fig. 4b und c).

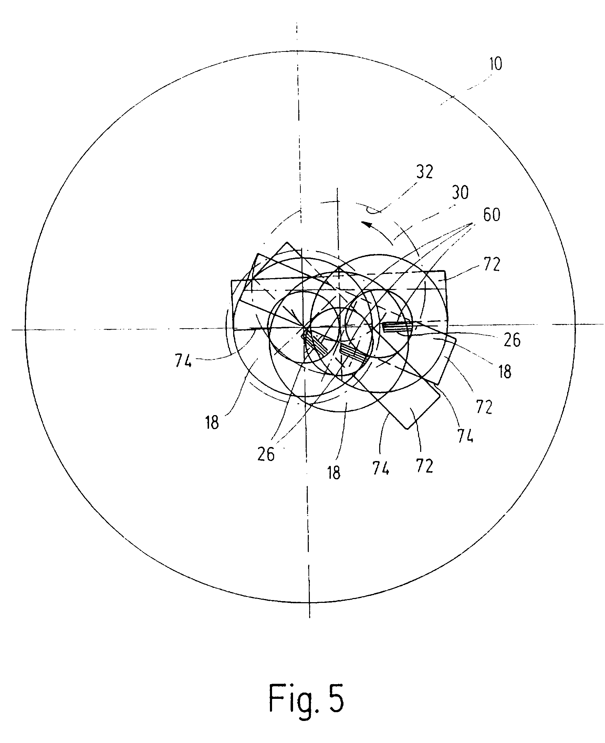

Bei dem in Fig. 5 in einer schematischen Draufsicht dargestellten Ausführungsbeispiel eines Werkzeugkopfes ist der um die Exzenterachse 28 im Grundkörper 10 drehbar gelagerte Drehschieber 30 ebenfalls mit einer Werkzeugaufnahme 18 bestückt, die in einer Exzenterbohrung 20 des Drehschiebers drehbar angeordnet ist. Die Ausrichtung der Bezugsebene 60 der Schneidplatte 26 in Bezug auf die Drehachse 12 des Werkzeugkopfes erfolgt dort durch eine Ausrichtleiste 72, die am Grundkörper 10 um die Drehachse 12 verdrehbar ist und mit ihrer Richtfläche 74 gegen die Bezugsebene 60 der Schneidplatte 26 anliegt und die Werkzeugaufnahme 18 beim Verstellvorgang in ihrer Exzenterbohrung 22 drehend mitnimmt. Der Ausrichtleiste 72 kommt hierbei also die gleiche Funktion wie den Zahnradgetrieben nach den Fig. 1 bis 4 zu.

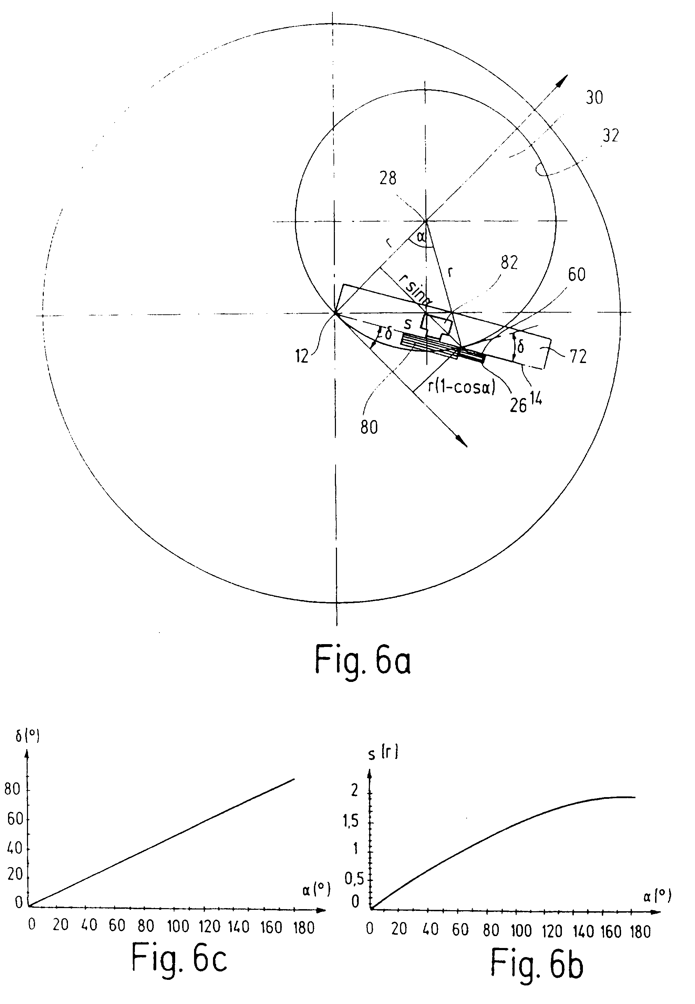

Bei dem in Fig. 6a gezeigten Ausführungsbeispiel ist ein Wegmeßsystem vorgesehen, das einen mit dem Schneidenträger verbundenen Maßstab 80 und einen auf der Ausrichtleiste 72 angeordneten Lesekopf 82 aufweist. Mit diesen Maßnahmen ist eine Absolutmessung des Verstellwegs der Schneide 24 gegenüber dem Grundkörper möglich.

In dem Diagramm nach Fig. 6a sind für den vereinfachten Fall des im Ausgangspunkt durch die Drehachse 12 verlaufenden Verstellwegs der Schneidplatte 26 die Strecken- und Winkelverhältnisse angegeben, aufgrund der die nachstehenden Formeln für den Schneidradius $s(\alpha)$ und für den Korrekturwinkel der Schneide $\delta(\alpha)$ herleitbar sind.

Der Schneidradius in bezug auf die Grundkörperachse 12 in Abhängigkeit vom Winkel $\alpha$ des Drehschiebers ergibt sich in diesem Fall zu

$$s(\alpha) = r\sqrt{2(1 - \cos\alpha)} \qquad (1)$$

worin r den Schneidradius in bezug auf die Exzenterachse 28 und zugleich die Exzentrizität des Drehschiebers 30 bedeutet.

Für den Korrekturwinkel $\delta$ in Abhängigkeit vom Drehwinkel $\alpha$ ergibt sich die Beziehung

$$\delta = \alpha/2 \qquad (2).$$

Die Beziehungen nach den Gleichungen (1) und (2) sind in den Graphen gemäß Fig. 6b und c dargestellt.

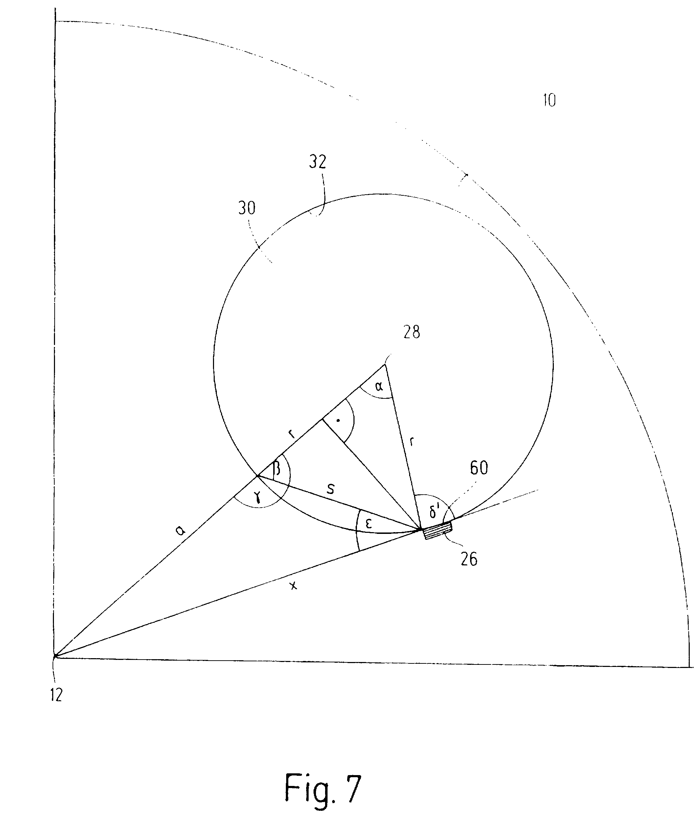

Das Diagramm nach Fig. 7 gibt die Strecken- und Winkel an, die für die Berechnung des Schneidradius x und des Korrekturwinkels $\delta'$ für den allgemeinen Fall des außermittig angeordneten Drehschieberexzenters notwendig sind.

Hieraus ergibt sich für den Schneidradius x in Abhängigkeit vom Drehwinkel $\alpha$ des Drehschiebers die Beziehung

$$x(\alpha) = \sqrt{a^2 + 2r^2(1 - \cos\alpha) + (4ar\sin\alpha(\alpha/2)} \qquad (3)$$

wobei r den Radius der Schneidplatte 26 in bezug auf die Exzenterachse 28 des Drehschiebers 30, und a den kleinsten Schneidradius in bezug auf die Drehachse 12 bedeuten. Für den Korrekturwinkel $\delta'$ in Abhängigkeit vom Drehwinkel $\alpha$ ergibt sich die Beziehung

$$\delta'(\alpha) = \alpha / 2 + 90° - \arcsin\frac{a\sqrt{1 + \cos\alpha}}{\sqrt{2}x(\alpha)} \qquad (4)$$

wobei $x(\alpha)$ aus der Gleichung (3) einzusetzen ist.

Die Definition des Korrekturwinkels $\delta'$ unterscheidet sich um den Winkel 90° von der Definition des Korrekturwinkeis $\delta$ nach Gleichung (2).

Die zusätzlich im Diagramm nach Fig. 7 angegebenen Winkel $\beta$, $\gamma$, $\varepsilon$ und die Strecke s sind Hilfsgrößen für die Herleitung der Formeln (3) und (4).

Zusammenfassend ist folgendes festzustellen: Die Erfindung bezieht sich auf einen Werkzeugkopf für den Einsatz in Werkzeugmaschinen. Der Werkzeugkopf besteht im wesentlichen aus einem Grundkörper 10, einem axial über den Grundkörper 10 überstehenden, mit einer Maschinenspindel kuppelbaren Werkzeugschaft 16, einer Werkzeugaufnahme 18 für ein Schneidwerkzeug 20 und einem die Werkzeugaufnahme 18 außermittig tragenden, relativ zum Grundkörper 10 unter Verstellen des Schneidradius des Schneidwerkzeugs 20 um eine zur Grundkörperachse 12 parallele Exzenterachse 28 drehbaren Drehschieber 30. Um eine beim Schneidvorgang konstante Schneidgeometrie zu gewährleisten, ist die Werkzeugaufnahme 18 in Abhängigkeit vom Verstellwinkel des Drehschiebers 30 oder vom Schneidradius gegenüber dem Drehschieber 30 definiert verstellbar.

## Patentansprüche

1. Werkzeugkopf für den Einsatz in Werkzeugmaschinen mit einem Grundkörper (10), mit einem am Grundkörper (10) angeordneten, mit einer Maschinenspindel (14) kuppelbaren Werkzeugschaft (16), mit einer Werkzeugaufnahme (18) für ein Schneidwerkzeug (20) und mit einem die Werkzeugaufnahme (18) außermittig tragenden, relativ zum Grundkörper (10) unter Verstellen des Schneidradius des Schneidwerkzeugs (20) drehbaren Drehschieber (30), **dadurch gekennzeichnet, daß** die Werkzeugaufnahme (18) zusammen mit dem Schneidwerkzeug (20) in Abhängigkeit vom Drehwinkel ($\alpha$) des Drehschiebers (30) oder vom Schneidradius (s, x) gegenüber dem Drehschieber (30) definiert drehverstellbar ist.

2. Werkzeugkopf nach Anspruch 1, **dadurch gekennzeichnet, daß** der Drehschieber (30) um eine zur Grundkörperachse (12) parallele Exzenterachse (28) gegenüber dem Grundkörper (10) verdrehbar ist.

3. Werkzeugkopf nach Anspruch 1 oder 2, **dadurch gekennzeichnet, daß** die Werkzeugaufnahme (18) unter definierter Ausrichtung des Schneidwerkzeugs (20) relativ zur Grundkörperachse (12) gegenüber dem Drehschieber (30) verstellbar ist.

4. Werkzeugkopf nach einem der Ansprüche 1 bis 3, **dadurch gekennzeichnet, daß** die Werkzeugaufnahme (18) unter Ausfluchtung einer mit dem Schneidwerkzeug (20) verbundenen Bezugsebene (60) mit der Grundkörperachse (12) gegenüber dem Drehschieber (30) verstellbar ist.

5. Werkzeugkopf nach einem der Ansprüche 1 bis 4, **dadurch gekennzeichnet, daß** die Werkzeugaufnahme (18) in einer Exzenterbohrung (22) des Drehschiebers (30) um eine zu dessen Exzenterachse (28) parallele Achse verdrehbar angeordnet ist.

6. Werkzeugkopf nach einem der Ansprüche 1 bis 5, **gekennzeichnet durch** eine radial über die Grundkörperachse (12) überstehende und um diese Achse drehbare Ausrichtleiste (72), gegenüber der eine an der Werkzeugaufnahme (18) oder am Schneidwerkzeug (20) angeordnete Bezugsebene (60) beim Verstellen des Drehschiebers (30) ausrichtbar ist.

7. Werkzeugkopf nach einem der Ansprüche 1 bis 6, **dadurch gekennzeichnet, daß** der Drehschieber (30) und die Werkzeugaufnahme (18) über Getriebemittel (50,52,54,58;62,64,66,68,70;72,74,60) miteinander und mit dem Grundkörper gekoppelt sind.

8. Werkzeugkopf nach Anspruch 7, **dadurch gekennzeichnet, daß** die Getriebemittel Zahnräder, Zahnkränze und/oder Zahnstangen umfassen.

9. Werzeugkopf nach Anspruch 7 oder 8, **dadurch gekennzeichnet, daß** die Getriebemittel spielfrei stellbar sind.

10. Werkzeugkopf nach einem der Ansprüche 7 bis 9, **dadurch gekennzeichnet, daß** die Getriebemittel auf der Antriebsseite ein rotatorisches Untersetzungsgetriebe (47) oder ein translatorisch/rotatorisches Umsetzungsgetriebe (47') aufweisen.

11. Werkzeugkopf nach Anspruch 10, **dadurch gekennzeichnet, daß** das rotatorische Untersetzungsgetriebe (47) als Planetengetriebe oder als Harmonic-Drive-Getriebe mit zueinander koaxialen An- und Abtriebsachsen (45,48) ausgebildet ist.

12. Werkzeugkopf nach Anspruch 10 oder 11, **dadurch gekennzeichnet, daß** das Untersetzungsgetriebe (47) oder das Umsetzungsgetriebe (47') und die an dieses angekoppelten Getriebemittel innerhalb des Grundkörpers (10) vorzugsweise radial ineinandergeschachtelt angeordnet sind.

13. Werkzeugkopf nach einem der Ansprüche 1 bis 12, **dadurch gekennzeichnet, daß** für den Schneidradius des Werkzeugkopfs in Abhängigkeit vom Drehwinkel $\alpha$ des Drehschiebers (30) um seine Exzenterachse (28) die Beziehung

$$x(\alpha) = \sqrt{a^2 + 2r^2(1 - \cos\alpha) + 4ar\sin\alpha(\alpha/2)}$$

und für den Korrekturwinkel $\delta'(\alpha)$ der Bezugsebene (60) des Schneidwerkzeugs (20) die Beziehung

$$\delta'(\alpha) = \alpha/2 + 90° - \arcsin\frac{a\sqrt{1 + \cos\alpha}}{\sqrt{2}x(\alpha)}$$

gelten, wobei r den Schneidradius bezüglich der Exzenterachse des Drehschiebers (Exzentrizität) und a den kleinsten Schneidradius bezüglich der Grundkörperachse (12) bedeuten.

14. Werkzeugkopf nach einem der Ansprüche 1 bis 13, **dadurch gekennzeichnet, daß** bei in einer Ausgangsstellung die Grundkörperachse (12) kreuzender Schneide (a = 0) für den Schneidradius s in Abhängigkeit vom Drehwinkel $\alpha$ des Drehschiebers 30 die Beziehung

$$s(\alpha) = r \sqrt{2(1 - \cos\alpha)}$$

und für den Korrekturwinkel die Beziehung

$$\delta = \alpha/2$$

gelten, wobei r die Exzentrizität des Drehschiebers (30) bedeutet.

15. Werkzeugkopf nach einem der Ansprüche 1 bis 14, **dadurch gekennzeichnet, daß** der Drehschieber (30) in einer Exzenterbohrung (32) des Grundkörpers (10) drehbar gelagert ist, daß die Werkzeugaufnahme (18) in einer Exzenterbohrung (22) des Drehschiebers (30) drehbar gelagert ist, daß zwischen einem grundkörperfesten oder maschinenseitigen Antriebsmechanismus (Drehstange, Abtriebswelle 48) und dem Drehschieber (30) drehschieberseitige Getriebemittel (50,52) angeordnet sind, daß zwischen der Werkzeugaufnahme (18) und dem Grundkörper (10) werkzeugaufnahmeseitige Getriebemittel (54,56,58) angeordnet sind, und daß die drehschieberseitigen Getriebemittel und die werkzeugaufnahmeseitigen Getriebemittel ein definiertes Übersetzungsverhältnis aufweisen.

16. Werkzeugkopf nach Anspruch 15, **dadurch gekennzeichnet, daß** die drehschieberseitigen Getriebemittel einen durch den Antriebsmechanismus (Drehstange, Abtriebswelle 48) antreibbaren, zur Grundkörperachse (12) konzentrischen, vorzugsweise als Innenzahnkranz (50) ausgebildeten Zahnkranz und einen mit diesem kämmenden, vorzugsweise als Außenzahnkranz (52) ausgebildeten drehschieberfesten Zahnkranz aufweisen.

17. Werkzeugkopf nach Anspruch 15 oder 16, **dadurch gekennzeichnet, daß** die werkzeugaufnahmeseitigen Getriebemittel ein grundkörperfestes Zahnrad (58) und einen mit diesem kämmenden, vorzugsweise als Innenzahnkranz (54) ausgebildeten, werkzeugaufnahmefesten Zahnkranz aufweist.

18. Werkzeugkopf nach einem der Ansprüche 1 bis 17, **dadurch gekennzeichnet, daß** zumindest ein Teil der Zahnkränze und der zugehörigen Bauteile segmentartig ausgebildet sind (Fig. 1c).

19. Werkzeugkopf nach einem der Ansprüche 1 bis 14, **dadurch gekennzeichnet, daß** in einer konzentrischen Bohrung (40) des Grundkörpers (10) ein Rundschieber (34), in einer exzentrischen Bohrung (32) des Rundschiebers (34) der Drehschieber (30) und in einer exzentrischen Bohrung (22) des Drehschiebers (30) die Werkzeugaufnahme (18) drehbar gelagert sind, daß der Rundschieber (34) unter Mitnahme des Drehschiebers (30) und der Werkzeugaufnahme (18) über einen grundkörperfesten oder maschinenseitigen Antriebsmechanismus (Drehstange, Abtriebswelle 48) um die Grundkörperachse (12) drehbar ist, daß zwischen dem Grundkörper (10) einerseits und den Drehschieber (30) und der Werkzeugaufnahme (18) andererseits Getriebemittel (62,64,66,68,70) angeordnet sind, die über ein definiertes Übersetzungsverhältnis aufeinander abgestimmt sind.

20. Werkzeugkopf nach Anspruch 19, **dadurch gekennzeichnet, daß** der Drehschieber (30) einen zu seiner Drehachse (28) konzentrischen Zahnkranz (62) trägt, mit dem er auf einem grundkörperfesten, vorzugsweise als Innenzahnkranz (64) ausgebildeten Zahnkranz abwälzbar ist.

21. Werkzeugkopf nach Anspruch 19 oder 20, **dadurch gekennzeichnet, daß** die Werkzeugaufnahme (18) einen zu ihrer Drehachse konzentrischen Zahnkranz (66) trägt, mit dem sie gegebenenfalls unter Zwischenschaltung eines am Drehschieber (30) lose gelagerten Zwischenzahnrads (68) auf einem grundkörperfesten, vorzugsweise als Innenzahnkranz (70) ausgebildeten Zahnkranz abwälzbar ist.

22. Werkzeugkopf nach einem der Ansprüche 15 bis 21, **dadurch gekennzeichnet, daß** der Antriebsmechanismus einen zur Grundkörperachse (12) koaxialen, maschinenseitig antreibbaren Drehstab aufweist.

23. Werkzeugkopf nach einem der Ansprüche 15 bis 22, **dadurch gekennzeichnet, daß** der Antriebsmechanismus Zwischengetriebe mit einer zur Grundkörperachse (12) konzentrischen Abtriebswelle (48) aufweist.

24. Werkzeugkopf nach einem der Ansprüche 19 bis 23, **dadurch gekennzeichnet, daß** die Exzentrizitäten der im Rundschieber (34) und im Drehschieber (30) befindlichen Exzenterbohrungen (32,22) gleich groß sind.

25. Werkzeugkopf nach einem der Ansprüche 1 bis 24, **gekennzeichnet durch** ein den Verstellwinkel des Drehschiebers (30) oder des Rundschiebers (34) oder den Verstellweg des Schneidwerkzeugs (20) messendes Winkel- oder Wegmeßsystem (80,82).

26. Werkzeugkopf nach einem der Ansprüche 1 bis 25, **gekennzeichnet durch** im Drehschieber (30) und/oder im Grundkörper (10) und/oder im Rundschieber (34) angeordnete Ausgleichsmassen (44,46) zum Auswuchten des Werkzeugkopfs bezüglich der Grundkörperachse (12).

**27.** Werkzeugkopf nach einem der Ansprüche 1 bis 26, **dadurch gekennzeichnet, daß** für den Drehschieber und die Werkzeugaufnahme voneinander getrennte elektronisch miteinander koppelbare Antriebsmittel vorgesehen sind.

**28.** Werkzeugkopf nach einem der Ansprüche 1 bis 27, **dadurch gekennzeichnet, daß** mindestens zwei in Exzenterbohrungen des Grundkörpers oder des Rundschiebers angeordnete, gemeinsam oder getrennt ansteuerbare Drehschieber mit verstellbaren Werkzeugaufnahmen vorgesehen sind.

**Claims**

**1.** A tool head for use in machine tools, comprising a base body (10), a tool shank (16) which is disposed on the base body (10) and which is adapted to be coupled to a rotating machine spindle (14), a tool holding fixture (18) for a cutting tool (20), and a rotary slide (30) which eccentrically carries the tool holding fixture (18) and which is rotatable with respect to the base body (10), thereby adjusting the cutting radius of the cutting tool (20), **characterized in that** the tool holding fixture (18) together with the cutting tool (20) is adapted to be adjusted in a defined manner with respect to the rotary slide (30) dependent on the rotary angle ($\alpha$) of the rotary slide (30) or on the cutting radius (s, x).

**2.** The tool head of claim 1, **characterized in that** the rotary slide (30) is rotatable with respect to the base body (10) about an eccentric axis (28) parallel to the base body axis (12).

**3.** The tool head of claim 1 or 2, **characterized in that** the tool holding fixture (18) is adapted to be adjusted with respect to the rotary slide (30) aligning the cutting tool (20) relative to the base body axis (12) in a defined manner.

**4.** The tool head of one of claim 1 to 3, **characterized in that** the tool holding fixture (18) is adjustable with respect to the rotary slide (30) with the base body axis (12) under alignment of a reference plane (60) associated with the cutting tool (20).

**5.** The tool head of one of claims 1 to 4, **characterized in that** the tool holding fixture (18) is disposed in an eccentric bore (22) of the rotary slide (30) such that it is rotatable about an axis which is parallel to the eccentric axis (28) of the rotary slide.

**6.** The tool head of one of claims 1 to 5, **characterized by** an alignment rail (72) which protrudes over the base body axis (12) and which is rotatable about this axis, with respect to which alignment rail a reference plane (60) which is associated with the tool holding fixture (18) or the cutting tool (20) is adapted to be aligned during the adjustment of the rotary slide (30).

**7.** The tool head of one of claims 1 to 6, **characterized in that** the rotary slide (30) and the tool holding fixture (18) are coupled to each other and to the base body by transmission means (50, 52, 54, 58; 62 64, 66, 68, 70; 72, 74, 60).

**8.** The tool head of claim 7, **characterized in that** the transmission means comprise gears, toothed rings and/or toothed racks.

**9.** The tool head of claim 7 or 8, **characterized in that** the transmission means are adapted to be actuated without free play.

**10.** The tool head of one of claims 7 to 9, **characterized in that** the transmission means comprise on the drive side a rotary reducing gear unit (47) or a translation-to-rotation conversion gear unit (47').

**11.** The tool head of claim 10, **characterized in that** the rotary reducing gear unit (47) is designed to be a planetary gear unit or a harmonic drive gear unit having drive and driven axes (45, 48) which are coaxial with respect to each other.

**12.** The tool head of claim 10 or 11, **characterized in that** the reducing gear unit (47) or the conversion gear unit (47') and the transmission means coupled thereto are disposed within the base body, preferably in a radially interpenatrating manner.

**13.** The tool head of one of claims 1 to 12, **characterized in that** for the cutting radius of the tool head in dependency of the angle ($\alpha$) of rotation of the rotary slide (30) about its eccentric axis (28) the relation

$$x(\alpha) = \sqrt{a^2 + 2r^2(1 - \cos\alpha) + 4ar \, \sin \, \alpha(\alpha \, / \, 2)}$$

and for the correction angle $\delta'(\alpha)$ of the reference plane (60) of the cutting tool (20) the relation

$$\delta'(\alpha) = \alpha \, / \, 2 + 90° \text{-arcsin} \, \frac{a\sqrt{1 + \cos\alpha}}{\sqrt{2}x(\alpha)}$$

are valid, wherein r denotes the cutting radius with respect to the eccentric axis of the rotary slide (eccentricity) and a denotes the smallest cutting ratio with respect to the base body axis (12).

**14.** The tool head of one of claims 1 to 13, **character-**

**ized in that** for the cutting edge intersecting the base body axis (12) in a starting position (a = 0) the relation

$$x(\alpha) = r \sqrt{2(1 - \cos\alpha)}$$

is valid for the cutting radius s in dependency of the angle of rotation $\alpha$ of the rotary slide (30) and

$$\delta = \alpha/2$$

is valid for the correction angle, wherein r denotes the eccentricity of the rotary slide (30).

15. The tool head of one of claims 1 to 14, **characterized in that** the rotary slide (30) is rotatably borne in an eccentric bore (32) of the base body (10), that the tool holding fixture (18) is rotatably borne in an eccentric bore (22) of the rotary slide (30), that transmission means (50, 52) on the side of the rotary slide are disposed between a base-body-fixed or machine-side drive mechanism (rotary rod, driven shaft 48) and the rotary slide (30), that transmission means (54, 56, 58) on the side of the tool holding fixture are disposed between the tool holding fixture (18) and the base body (10), and that the transmission means on the side of the rotary slide and the transmission means on the side of the tool holding fixture have a defined transmission ratio.

16. The tool head of claim 15, **characterized in that** the transmission means on the side of the rotary slide comprise a toothed ring which is adapted to be driven by the drive mechanism (rotary rod, driven shaft 48), which is concentric with respect to the base body axis (12), and which is preferably designed to be an internally toothed ring (50), and comprising a toothed ring meshing with the former, which is preferably designed to be a rotary-slide-fixed externally toothed ring (52).

17. The tool head of claim 15 or 16, **characterized in that** the transmission means on the side of the tool holding fixture comprise a base-body-fixed gear (58) and a tool-holding-fixture-fixed toothed ring meshing therewith and preferably being formed to be an internally toothed ring (54).

18. The tool head of one of claims 1 to 17, **characterized in that** at least part of the toothed rings and the associated parts are formed segment-like (Fig. 1c).

19. The tool head of one of claims 1 to 14, **characterized in that** a round slide (34) is rotatably borne in a concentric bore (40) of the base body (10), that the rotary slide (30) is rotatably borne in an eccentric bore (32) of the round slide (34), that the tool holding fixture (18) is rotatably borne in an eccentric bore (22) of the rotary slide (30), that the round slide (34) is rotatable, taking along the rotary slide (30) and the tool holding fixture (18), about the base body axis (12) by means of a base-body-fixed or machine-side drive mechanism (rotary rod, driven shaft 48), that transmission means (62, 64, 66, 68, 70) are disposed between the base body (12) on the one hand and the rotary slide (30) and the tool holding fixture (18) on the other hand, which transmission means are matched to each other by way of a defined transmission ratio.

20. The tool head of claim 19, **characterized in that** the rotary slide (30) carries a toothed ring (62) which is concentric with respect to it axis of rotation (28), with which it rolls off on a base-body-fixed toothed ring which is preferably formed to by an internally toothed ring (64).

21. The tool head of claim 19 or 20, **characterized in that** the tool holding fixture (18) carries a toothed ring (66) which is concentric with respect to its axis of rotation, with which it rolls off on a base-body-fixed toothed ring which is preferably formed to be an internally toothed ring (70), if need be over an interposed intermediate gear (68) loosely borne on the rotary slide (30).

22. The tool head of one of claims 15 to 21, **characterized in that** the drive mechanism comprises a rotary rod which is coaxial with respect to the base body axis (12) and which is driven from the machine side.

23. The tool head of one of claims 15 to 22, **characterized in that** the drive mechanism comprises an intermediate transmission having a driven shaft (48) which is concentric with respect to the base body axis (12).

24. The tool head of one of claims 19 to 23, **characterized in that** the eccentricities of the eccentric bores (32, 22) in the round slide (34) and the rotary slide (30) are of equal magnitude.

25. The tool head of one of claims 1 to 24, **characterized by** an angle or displacement measuring system (80, 82) measuring the adjusting angle of the rotary slide (30) or of the round slide (34) or the displacement of the cutting tool (20).

26. The tool head of one of claims 1 to 25, **characterized by** balancing weights (44, 46) disposed in the rotary slide (30) and/or the base body (10) and/or the round slide (34) for balancing the tool head with respect to the base body axis (12).

27. The tool head of one of claims 1 to 26, **characterized in that** separate drive means which can be electronically coupled to each other are provided for the rotary slide (30) and the tool holding fixture (18).

28. The tool head of one of claims 1 to 27, **characterized in that** at least two rotary slides having adjustable tool holding fixtures are provided, which are disposed in eccentric bores of the base body or of the round slide and which can be driven in unision or seperately.

**Revendications**

1. Tête d'outil destinée à être utilisée dans des machines-outils, comprenant un corps de base (10), une tige d'outil (16) située sur le corps de base (10) et pouvant être accouplée à un arbre (14), un raccordement d'outil (18) pour un outil de coupe (20) et un tiroir rotatif (30) portant de façon excentrée le raccordement d'outil (18) et pouvant tourner par rapport au corps de base (10) lors de la modification du rayon de coupe de l'outil de coupe (20), **caractérisée en ce que** le raccordement d'outil (18) avec l'outil de coupe (20) peut être déplacé en le faisant tourner de façon définie par rapport au tiroir rotatif (30) en fonction de l'angle de rotation ($\alpha$) du tiroir rotatif (30) ou du rayon de coupe (s, x).

2. Tête d'outil selon la revendication 1, **caractérisée en ce que** le tiroir rotatif (30) peut tourner par rapport au corps de base (10) autour d'un axe excentrique (28) parallèle à l'axe (12) du corps de base.

3. Tête d'outil selon la revendication 1 ou 2, **caractérisée en ce que** le raccordement d'outil (18) peut être déplacé par rapport au tiroir rotatif (30) en orientant de façon définie l'outil de coupe (20) par rapport à l'axe (12) du corps de base.

4. Tête d'outil selon l'une des revendications 1 à 3, **caractérisée en ce que** le raccordement d'outil (18) peut être déplacé par rapport au tiroir rotatif (30) en alignant un plan de référence (60) associé à l'outil de coupe (20) sur l'axe (12) du corps de base.

5. Tête d'outil selon l'une des revendications 1 à 4, **caractérisée en ce que** le raccordement d'outil (18) est placé dans un perçage excentrique (22) du tiroir rotatif (30) de manière à pouvoir tourner autour d'un axe parallèle à l'axe excentrique (28) de ce dernier.

6. Tête d'outil selon l'une des revendications 1 à 5, **caractérisée par** un listel d'alignement (72) dépassant radialement de l'axe (12) du corps de base et pouvant tourner autour de cet axe, par rapport auquel un plan de référence (60) situé sur le raccordement d'outil (18) ou sur l'outil de coupe (20) peut être orienté lors du déplacement du tiroir rotatif (30).

7. Tête d'outil selon l'une des revendications 1 à 6, **caractérisée en ce que** le tiroir rotatif (30) et le raccordement d'outil (18) sont accouplés entre eux et au corps de base par l'intermédiaire d'engrenages (50, 52, 54, 58 ; 62, 64, 66, 68, 70 ; 72, 74, 60).

8. Tête d'outil selon la revendication 7, **caractérisée en ce que** les engrenages comprennent des roues dentées, des couronnes dentées et/ou des crémaillères.

9. Tête d'outil selon la revendication 7 ou 8, **caractérisée en ce que** les engrenages peuvent être ajustés sans jeu.

10. Tête d'outil selon l'une des revendications 7 à 9, **caractérisée en ce que** les engrenages présentent du côté menant un démultiplicateur rotatoire (47) ou un mécanisme de transformation translation/rotation (47').

11. Tête d'outil selon la revendication 10, **caractérisée en ce que** le démultiplicateur rotatoire (47) est réalisé en tant qu'engrenage épicycloïdal ou planétaire avec des arbres menant et mené coaxiaux (45, 48).

12. Tête d'outil selon la revendication 10 ou 11, **caractérisée en ce que** le démultiplicateur (47) ou le mécanisme de transformation (47') et les engrenages accouplés à ceux-ci sont disposés à l'intérieur du corps de base (10) en étant de préférence emboîtés radialement les uns dans les autres.

13. Tête d'outil selon l'une des revendications 1 à 12, **caractérisée en ce que** pour déterminer le rayon de coupe de la tête d'outil en fonction de l'angle de rotation $\alpha$ du tiroir rotatif (30) autour de son axe excentrique (28), on applique la relation suivante :

$$x(\alpha) = \sqrt{a^2 + 2r^2(1 - \cos \alpha) + 4ar \sin \alpha(\alpha / 2)}$$

et pour calculer l'angle de correction $\delta'(\alpha)$ du plan de référence (60) de l'outil de coupe (20), on applique la relation suivante :

$$\delta'(\alpha) = \alpha / 2 + 90° - \arcsin \frac{a\sqrt{1 + \cos\alpha}}{\sqrt{2}x(\alpha)}$$

sachant que r est le rayon de coupe par rapport à l'axe excentrique du tiroir rotatif (excentricité) et a le plus petit rayon de coupe par rapport à l'axe (12) du corps de base.

14. Tête d'outil selon l'une des revendications 1 à 13, **caractérisée en ce que**, dans le cas où le tranchant coupe en position de départ l'axe (12) du corps de base (a = 0), on applique, pour déterminer le rayon de coupe s en fonction de l'angle de rotation $\alpha$ du tiroir rotatif 30, la relation suivante :

$$s(\alpha) = r\sqrt{2(1 - \cos\alpha)}$$

et pour déterminer l'angle de correction la relation suivante :

$$\delta = \alpha/2$$

r correspondant à l'excentricité du tiroir rotatif (30).

15. Tête d'outil selon l'une des revendications 1 à 14, **caractérisée en ce que** le tiroir rotatif (30) est monté de façon à tourner dans un perçage excentrique (32) du corps de base (10), **en ce que** le raccordement d'outil (18) est monté de façon à tourner dans un perçage excentrique (22) du tiroir rotatif (30), **en ce qu'**entre un mécanisme de commande (barre de torsion, arbre mené 48) fixé sur le corps de base ou situé côté machine et le tiroir rotatif (30) sont disposés des engrenages (50, 52) situés côté tiroir rotatif, **en ce qu'**entre le raccordement d'outil (18) et le corps de base (10) sont disposés des engrenages (54, 56, 58) situés côté raccordement d'outil, et **en ce que** les engrenages situés côté tiroir rotatif et les engrenages situés côté raccordement d'outil présentent un rapport de multiplication défini.

16. Tête d'outil selon la revendication 15, **caractérisée en ce que** les engrenages situés côté tiroir rotatif présentent une couronne dentée de préférence réalisée en tant que couronne à denture intérieure (50), qui est concentrique par rapport à l'axe (12) du corps de base et qui peut être entraînée par le mécanisme de commande (barre de torsion, arbre mené 48), ainsi qu'une couronne dentée de préférence réalisée en tant que couronne à denture extérieure (52), qui est fixée sur le tiroir rotatif et qui engrène avec la précédente.

17. Tête d'outil selon la revendication 15 ou 16, **caractérisée en ce que** les engrenages situés côté raccordement d'outil comportent une roue dentée (58) fixée sur le corps de base et une couronne dentée réalisée de préférence en tant que couronne à denture intérieure (54), qui est fixée sur le raccordement d'outil et qui engrène avec la roue dentée.

18. Tête d'outil selon l'une des revendications 1 à 17, **caractérisée en ce qu'**au moins une partie des couronnes dentées et des éléments qui leur sont associés sont réalisés sous forme de segments (fig. 1c).

19. Tête d'outil selon l'une des revendications 1 à 14, **caractérisée en ce qu'**un tiroir rond (34) est monté de façon rotative dans un perçage concentrique (40) du corps de base (10), le tiroir rotatif (30) est monté de façon rotative dans un perçage excentrique (32) du tiroir rond (34) et le raccordement d'outil (18) est monté de façon rotative dans un perçage excentrique (22) du tiroir rotatif (30), **en ce que** le tiroir rond (34) peut tourner autour de l'axe (12) du corps de base par l'intermédiaire d'un mécanisme de commande fixé sur le corps de base ou situé côté machine (barre de torsion, arbre mené 48) en entraînant le tiroir rotatif (30) et le raccordement d'outil (18), et **en ce qu'**entre le corps de base (10), d'une part, et le tiroir rotatif (30) et le raccordement d'outil (18), d'autre part, sont placés des engrenages (62, 64, 66, 68, 70) qui sont coordonnés entre eux par un rapport de multiplication défini.

20. Tête d'outil selon la revendication 19, **caractérisée en ce que** le tiroir rotatif (30) porte une couronne dentée (62) concentrique par rapport à son axe de rotation (28), à l'aide de laquelle il peut rouler sur une couronne dentée fixée sur le corps de base et de préférence réalisée en tant que couronne à denture intérieure (64).

21. Tête d'outil selon la revendication 19 ou 20, **caractérisée en ce que** le raccordement d'outil (18) porte une couronne dentée (66) concentrique par rapport à son axe de rotation, à l'aide de laquelle il peut rouler sur une couronne dentée fixée sur le corps de base et de préférence réalisée en tant que couronne à denture intérieure (70), le cas échant en intercalant une couronne dentée intermédiaire (68) montée de manière folle sur le tiroir rotatif (30).

22. Tête d'outil selon l'une des revendications 15 à 21, **caractérisée en ce que** le mécanisme de commande présente une barre de torsion coaxiale par rapport à l'axe (12) du corps de base et pouvant être entraînée côté machine.

23. Tête d'outil selon l'une des revendications 15 à 22, **caractérisée en ce que** le mécanisme de commande présente un renvoi comportant un arbre mené (48) concentrique par rapport à l'axe (12) du corps de base.

24. Tête d'outil selon l'une des revendications 19 à 23, **caractérisée en ce que** les excentricités des perçages excentriques (32, 22) situés dans le tiroir rond (34) et dans le tiroir rotatif (30) sont identiques.

25. Tête d'outil selon l'une des revendications 1 à 24, **caractérisée par** un système de mesure d'angle ou de déplacement (80, 82) mesurant l'angle de déplacement du tiroir rotatif (30) ou du tiroir rond (34) ou le déplacement de l'outil de coupe (20).

26. Tête d'outil selon l'une des revendications 1 à 25, **caractérisée par** des masses compensatrices (44, 46) disposées dans le tiroir rotatif (30) et/ou dans le corps de base (10) et/ou dans le tiroir rond (34), pour équilibrer la tête d'outil par rapport à l'axe (12) du corps de base.

27. Tête d'outil selon l'une des revendications 1 à 26, **caractérisée en ce que** des moyens de commande distincts pouvant être couplés électroniquement entre eux sont prévus pour le tiroir rotatif et le raccordement d'outil.

28. Tête d'outil selon l'une des revendications 1 à 27, **caractérisée en ce qu'**au moins deux tiroirs rotatifs à raccordements d'outil déplaçables, qui peuvent être commandés ensemble ou séparément, sont prévus dans des perçages excentriques du corps de base ou du tiroir rond.

Fig. 1a

Fig. 1c

Fig. 1b

Fig. 1d

Fig. 2b

Fig. 2a

Fig. 3a

Fig. 3b

Fig. 3c

Fig. 3d

Fig. 4a

Fig. 4c

Fig. 4b

Fig. 5

Fig. 6a

Fig. 6c

Fig. 6b

Fig. 7